(19) Europäisches Patentamt
European Patent Office
Office européen des brevets

(11) **EP 3 857 689 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **19774081.4**

(22) Anmeldetag: **20.09.2019**

(51) Internationale Patentklassifikation (IPC):
**B60L 50/50** (2019.01)   **H02M 7/5387** (2007.01)
**H02M 1/08** (2006.01)   **H02M 3/335** (2006.01)

(52) Gemeinsame Patentklassifikation (CPC):
**H02M 7/53871; B60L 50/50; H02M 1/08; H02M 3/335; H02M 3/33523;** B60L 2210/30; B60L 2210/40; H02M 1/0006; H02M 1/0058; Y02T 10/70; Y02T 10/72

(86) Internationale Anmeldenummer:
**PCT/EP2019/075308**

(87) Internationale Veröffentlichungsnummer:
**WO 2020/064539 (02.04.2020 Gazette 2020/14)**

(54) **STROMRICHTER, FAHRZEUG UND VERFAHREN ZUM BETREIBEN EINES STROMRICHTERS**

POWER CONVERTER, VEHICLE AND METHOD FOR OPERATING A POWER CONVERTER

CONVERTISSEUR DE COURANT, VÉHICULE ET PROCÉDÉ PERMETTANT DE FAIRE FONCTIONNER UN CONVERTISSEUR DE COURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2018 DE 102018124094**

(43) Veröffentlichungstag der Anmeldung:
**04.08.2021 Patentblatt 2021/31**

(73) Patentinhaber: **Valeo eAutomotive Germany GmbH**
**91056 Erlangen (DE)**

(72) Erfinder:
• **BUCHER, Alexander**
  **90480 Nürnberg (DE)**
• **PAWELLEK, Alexander**
  **91058 Erlangen (DE)**

(56) Entgegenhaltungen:
**EP-A1- 2 302 798**   **EP-A1- 3 076 550**
**EP-A2- 0 251 239**   **EP-B1- 0 251 239**
**DE-A1- 102013 205 706**   **US-A1- 2009 147 544**
**US-A1- 2010 259 098**

## Beschreibung

Die vorliegende Erfindung betrifft einen Stromrichter. Daneben betrifft die Erfindung ein Fahrzeug und ein Verfahren zum Betreiben eines Stromrichters.

Die US 2010/259098 A1 offenbart einen Wechselrichter, aufweisend eine Stufe, die in Abhängigkeit von Steuersignalen betreibbare Schaltelemente aufweist, einen Controller, der zum Ausgeben eines die Steuersignale repräsentierenden frequenzmodulierten Signals zum Steuern der Schaltelemente eingerichtet ist, einen Signalwandler, der zum Wandeln der frequenzmodulierten Signale in die Steuersignale eingerichtet ist, und einen Regler, der zur Versorgung der Stufe eingerichtet ist. Der Signalkonverter weist einen Transformator, einen Gleichrichter und ein Filter auf, wobei das Filter einen Hochpassfilter und einen Tiefpassfilter umfasst, die selektiv eines oder mehrere der Schaltelemente in Abhängigkeit einer ersten oder zweiten Frequenz der frequenzmodulierten Signale aktivieren.

Die EP 2 302 798 A1 offenbart eine Steuerung für einen IGBT mit einer Sekundärsteuerung und einer Primärsteuerung, die eine durch einen Transformator voneinander entkoppelte Stromleitungen aufweisen. Eine erste Steuerlogik der Sekundärsteuerung erzeugt eine Impulsfolge, die kodiert, dass die Primärsteuerung den IGBT ein- bzw. ausschalten soll. Ein Wechselstromerzeuger der Sekundärsteuerung wird derart angesteuert, dass dieser ein mit der Impulsfolge pulsweitenmoduliertes Wechselstromsignal erzeugt, das über den Transformator an die Primärsteuerung übertragen wird. Eine zweite Steuerlogik der Primärsteuerung demoduliert das pulsweitenmodulierte Signal und steuert den IGBT zum Ein- bzw. Ausschalten an. Die Primärsteuerung wird über die Stromleitungen mit elektrischem Strom versorgt.

Die US 2009/0147544 A1 offenbart einen Schaltkreis, umfassend eine Leistungsschalttransistor, einen Steuerschaltkreis und einen Transformator, der einen Ausgang der Steuerschaltkreises mit dem Leistungsschalttransistor koppelt.

Eine erste Wicklung des Transformators ist mit dem Steuerschaltkreis verbunden. Der Schaltkreis umfasst ferner einen Demodulationsschaltkreis, der mit einer zweiten Wicklung des Transformators verbunden ist und dessen Ausgang ein Gatesteuersignal ist, das aus einem an der zweiten Wicklung empfangenen Steuersignal erzeugt wird. Ein Gleichrichterschaltkreis, der mit der zweiten Wicklung verbunden ist, generiert eine Gleichspannung aus dem Steuersignal und versorgt den Demodulationsschaltkreis.

Die EP 3 076 550 A1 offenbart einen weiteren Schaltkreis zur galvanisch isolierten Steuerung eines Halbleiterschalters. Die EP 0 251 239 A2 offenbart einen FM-Demodulator.

Insbesondere im Bereich der Fahrzeugantriebstechnik werden Stromrichter in eine Primärseite, die typischerweise Steuerungsaufgaben auf einem niedrigen Spannungsniveau realisiert, und in eine Sekundärseite, die eine Umwandlung der Stromart und ihrer charakteristischen Parameter mittels Leistungselektronik realisiert, getrennt. Diese galvanische Trennung stellt eine Isolationsbarriere dar, die zum einen der elektrischen Sicherheit des Stromrichters, insbesondere dem Personenschutz bei einer Verwendung in einem IT-System (Isolé Terre), und zum anderen einer funktionalen Aufteilung dient, wenn die Primärseite und die Sekundärseite auf unterschiedlichen, mitunter wechselnden, Potentialen betrieben werden.

Die Sekundärseite weist darüber hinaus in der Regel eine Funktionseinheit, wie beispielsweise Treibereinrichtung für die Leistungselektronik, auf, deren Betriebsspannung mittels einer Leistungsübertragungseinrichtung aus einer primärseitigen Versorgungsspannung gewandelt wird. Um die galvanische Trennung auch für die Funktionseinheit zu realisieren, weist die Leistungsübertragungseinrichtung eine Übertragereinheit auf, welche die galvanische Trennung realisiert. Dabei kann die Funktionseinheit in Abhängigkeit einer Hilfsinformation betreibbar sein, die ihrerseits primärseitig erzeugt wird und über die Isolationsbarriere zu übertragen ist. Es ist bekannt derartige Hilfsinformationen über eine induktive Kopplung, als integrierte Schaltkreise ausgebildete Mikro-Transformatoren, oder optisch über Optokoppler von der Primärseite auf die Sekundärseite zu übertragen. Alternativ kann die galvanische Trennung kapazitiv, piezoelektronisch oder akustisch realisiert werden.

Derartige Übertragungseinrichtungen für die Hilfsinformation verursachen jedoch zusätzlichen Bauteilaufwand und ziehen zusätzlichen Flächen- und Platzierungsaufwand auf einer Leiterplatte nach sich, was wiederum höhere Kosten des Stromrichters verursacht. Jede zusätzliche Übertragungseinrichtung vergrößert außerdem die in Summe wirksame Koppelkapazität zwischen der Primärseite und der Sekundärseite, was sich negativ auf die elektromagnetische Verträglichkeit des Stromrichters auswirkt.

Der Erfindung liegt mithin die Aufgabe zugrunde, eine demgegenüber verbesserte, insbesondere aufwandsärmere und/oder elektromagnetisch verträglichere, Möglichkeit zur Übertragung einer Hilfsinformation von einer Primärseite auf eine Sekundärseite eines Stromrichters anzugeben.

Zur Lösung dieser Aufgabe wird erfindungsgemäß ein Stromrichter gemäß Anspruch 1 vorgeschlagen. Vorteilhafte Ausgestaltungen sind Gegenstand der abhängigen Ansprüche

Die Erfindung beruht auf der Überlegung, die Übertragereinheit der Leistungsübertragungseinrichtung neben einer Leistungsübertragung auch zum Übertragen der Hilfsinformation von der Primärseite auf die Sekundärseite zu nutzen. Mit anderen Worten erfolgt eine Integration der Leistungsübertragung und der Informationsübertragung in die Übertragereinheit, welche zumindest abschnittsweise eine Isolationsbarriere zwischen der Primärseite und der Sekundärseite realisiert. Dazu ist primärseitig zunächst eine Modulationseinrichtung vorgesehen, welche eine Frequenzmodulation des Taktsignals für die Schalteinheit in Abhängigkeit der Hilfsinformation realisiert. Die geschaltete Versorgungsspannung und die auf sie modulierte Hilfsinformation können dann gemeinsam mittels der Übertragereinheit von der Primärseite auf die Sekundärseite übertragen werden, wo die Demodulationseinrichtung die Hilfsinformation in Form eines oder mehrerer Nutzsignale zurückgewinnen kann.

Vorteilhafterweise kann so auf zusätzliche Übertragungseinrichtungen zur Übertragung der Hilfsinformation verzichtet werden, weil die Leistungsübertragungseinrichtung für die Übertragung der Hilfsinformation mitgenutzt wird. Dadurch wird der Stromrichter wesentlich bauraumsparender realisiert, da die eingesparten Übertragungseinrichtungen zusätzliche Luft- und Kriechstreckenanforderungen erfüllen müssten, die jedoch bereits durch die Übertragereinheit erfüllt werden. Ebenso wird eine verbesserte elektromagnetische Verträglichkeit erzielt, da eine Erhöhung einer Koppelkapazität zwischen der Primärseite und der Sekundärseite durch die zusätzliche Übertragungseinrichtung entfällt.

Der erfindungsgemäße Stromrichter realisiert durch die galvanische Trennung bevorzugt eine Isolationsbemessungsspannung von wenigstens 1 kV, bevorzugt wenigstens 2 kV, besonders bevorzugt wenigstens 3 kV, ganz besonders bevorzugt wenigstens 4 kV. Typischerweise sind ausschließlich primärseitige Komponenten des Stromrichters und ausschließlich sekundärseitige Komponenten des Stromrichters räumlich voneinander getrennt, insbesondere derart voneinander beabstandet, dass erforderliche Abstände zur Einhaltung von Kriechstrecken entlang nichtleitender Oberflächen eingehalten werden. Ein Zwischenraum zwischen den Komponenten ist typischerweise mit einem Medium ausreichend hoher Durchschlagfestigkeit, einschließlich Luft, gefüllt.

Die Modulationseinrichtung umfasst typischerweise eine Signalgeneratoreinheit, mittels welcher ein Trägersignal bereitstellbar ist, und eine Modulatoreinheit, mittels welcher das Trägersignal durch ein die Hilfsinformation beschreibendes Signal modulierbar und das Taktsignal bereitstellbar ist. Zweckmäßigerweise umfasst die Modulationseinrichtung auch eine Codiereinheit, mittels welcher Informationszuständen der Hilfsinformation durch ein codiertes Signal repräsentierte Signalzustände zugeordnet werden. Der Übertragereinheit ist sekundärseitig typischerweise eine Gleichrichtereinheit und/oder eine Glättungseinheit nachgeschaltet. Die Sekundärspannung kann zwischen einer Sekundärspule der Übertragereinheit und der Gleichrichtereinheit abgreifbar und einem Eingang der Demodulationseinrichtung bereitstellbar sein. Die Versorgungsspannung und die Betriebsspannung sind typischerweise Gleichspannungen.

Dadurch, dass die Modulationseinrichtung erfindungsgemäß dazu eingerichtet ist, die Frequenz des Taktsignals innerhalb eines Frequenzintervalls zu verändern, in welchem ein Spannungsübersetzungsverhältnis bezüglich Ein- und Ausgangsspannung der Leistungsübertragungseinrichtung im Wesentlichen frequenzinvariant ist, kann vermieden werden, dass sich die Sekundärspannung und damit auch die Betriebsspannung für die Funktioneinheit durch das modulierte Taktsignal erheblich verändert. Der Begriff "im Wesentlichen frequenzinvariant" bedeutet dabei, dass sich die Betriebsspannungen, die bei einer Modulation mit einem beliebigen Paar von Informationszuständen entstehen, um höchstens 20 %, bevorzugt höchstens 10 %, besonders bevorzugt höchstens 5 %, unterscheiden.

Die Leistungsübertragungseinrichtung kann beim erfindungsgemäßen Stromrichter eine hartschaltende Topologie aufweisen. Ein Beispiel einer solchen Leistungsübertragungseinrichtung ist ein Sperrwandler (Flyback-Converter). Dabei wird es besonders bevorzugt, wenn die Modulationseinrichtung dazu eingerichtet ist, das Taktsignal derart bereitzustellen, dass die Leistungsübertragungseinrichtung in einem kontinuierlichen Betriebsmodus betrieben wird. Zweckmäßigerweise ist auch die Leistungsübertragungseinrichtung dazu eingerichtet, bei durch die Modulationseinrichtung bereitgestellten Frequenzen des Taktsignals im kontinuierlichen Betriebsmodus betrieben zu werden. Im kontinuierlichen Betriebsmodus hat die Modulation nämlich keinen nennenswerten Einfluss auf ein Spannungsübersetzungsverhältnis bezüglich Ein- und Ausgangsspannung der Leistungsübertragungseinrichtung.

Alternativ kann die Leistungsübertragungseinrichtung des erfindungsgemäßen Stromrichters vom lastresonanten Typ sein. Ein typischer Vertreter einer solchen Leistungsübertragungseinrichtung ist ein LLC-Converter. Um hier ein frequenzinvariantes Spannungsübersetzungsverhältnis bezüglich Ein- und Ausgangsspannung zu erzielen, ist es zweckmäßig, wenn die Modulationseinrichtung dazu eingerichtet ist, die Frequenz des Taktsignals derart vorzugeben, dass sie mindestens das 0,2-fache, bevorzugt das 0,6-fache, besonders bevorzugt das 0,8-fache, ganz besonders bevorzugt das 1,0-fache der normierten Schaltfrequenz der Leistungsübertragungseinrichtung beträgt. Die normierte Schaltfrequenz entspricht dabei dem Verhältnis der Frequenz des Taktsignals zur primärseitigen Resonanzfrequenz der Leistungsübertragungseinrichtung.

Hinsichtlich der Demodulationseinrichtung des erfindungsgemäßen Stromrichters wird es bevorzugt, wenn diese eine Monoflopeinheit aufweist, deren Haltezeit geringer als die kürzeste Periodendauer des Taktsignals ist, der ein Informationszustand der Hilfsinformation zugeordnet ist, und die zum Bereitstellen eines pulsmodulierten Nutzsignals eingerichtet ist. Die Demodulationseinrichtung lässt sich so mit geringem schaltungstechnischen Aufwand, beispielsweise durch einen Timerbaustein (NE555) oder eine diskrete Transistorschaltung realisieren. Bei typischen Frequenzen des Taktsignals lassen sich bei Verwendung der Monoflopeinheit durchaus sechs, acht, zwölf oder mehr Informationszustände übertragen.

Mit Vorteil kann ferner vorgesehen sein, dass die Demodulationseinrichtung eine Tiefpasseinheit aufweist, welche der Monoflopeinheit nachgeschaltet und zum Bereitstellen eines analogen Nutzsignals aus dem pulsmodulierten Nutzsignal eingerichtet ist. So kann ein im Wesentlichen linearer Zusammenhang zwischen der Frequenz des Taktsignals und der Spannung des analogen Nutzsignals erreicht werden. Die Tiefpasseinheit kann ein RC-Glied oder ein sonstiges mittelwertbildendes Filter sein.

Alternativ oder zusätzlich kann bei dem erfindungsgemäßen Stromrichter vorgesehen sein, dass die Demodulationseinrichtung eine PLL-Einheit aufweist, welche zum Bereitstellen eines analogen Nutzsignals eingerichtet ist. Die PLL-Einheit (Phasenregelschleife) ermöglicht die Übertragung eines großen Wertebereichs von Informationszuständen der Hilfsinformation, da auch kleinere Frequenzänderungen zu einer relativ hohen Änderung der Spannung des Nutzsignals führen. Diese höhere Empfindlichkeit minimiert zum einen die erforderliche Frequenzvariation seitens der Modulationseinrichtung und lässt zum anderen die zuvor beschriebene Mittelwertbildung entfallen. Zudem wird eine im Vergleich zur Monoflopeinheit geringe Übertragungszeit realisiert. Die PLL-Einheit kann zudem durch standardisierte integrierte Schaltkreise realisiert sein, da die Anforderungen an die Güte der PLL-Einheit für die typischen Betriebsszenarien des erfindungsgemäßen Stromrichters gering sind. So kann eine vergleichsweise kosten- und bauraumsparende Implementierung der PLL-Einheit erreicht werden. Zweckmäßigerweise ist die PLL-Einheit dazu eingerichtet, ein Eingangssignal eines spannungsgesteuerten Oszillators der PLL-Einheit als analoges Nutzsignal bereitzustellen.

Darüber hinaus kann die Demodulationseinrichtung eine Analog-Digital-Umsetzereinheit aufweisen, welche zum Umsetzen des analogen Nutzsignals in ein digitales Nutzsignal eingerichtet ist. Dies erlaubt eine rechentechnische Weiterverarbeitung des Nutzsignals bzw. der Hilfsinformation auf der Sekundärseite.

Bei einer weiteren zweckmäßigen Ausführungsform des erfindungsgemäßen Stromrichters weist die Demodulationseinrichtung eine Filtereinheit mit wenigstens einem Filterelement auf, dessen Frequenzgang derart gewählt ist, dass das Filterelement bei einer durch die Modulationseinrichtung vorgegebenen Frequenz in einem Stoppband oder einem Passband betrieben wird. Zweckmäßigerweise sind für n möglich Informationszustände der Hilfsinformation zumindest n-1 Filterelemente vorgesehen. Ferner kann der Filtereinheit eine das Nutzsignal bereitstellende Entscheidungseinheit nachgestaltet sein. Die Filterelemente können passive Filterelemente sein, was eine schaltungstechnisch einfache Realisierung ermöglicht. Um eine sichere Detektion der Informationszustände, insbesondere bei geringen Abständen zwischen vorgesehenen Taktfrequenzen, zu ermöglichen, können die Filterelemente aktive Filterelemente sein, welche einen steileren Frequenzgang aufweisen. Die Filterelemente können eine Hochpasscharakteristik, eine Tiefpasscharakteristik, eine Bandpasscharakteristik oder eine Bandstoppcharakteristik aufweisen. Insbesondere können die Filterelemente Kerbfilter sein.

Der erfindungsgemäße Stromrichter weist typischerweise eine sekundärseitige Leistungseinheit mit wenigstens einem Leistungsschaltelement auf, welches in Abhängigkeit von primärseitig erzeugten Ansteuersignalen ansteuerbar ist. Das Leistungsschaltelement ist typischerweise ein Halbleiterleistungsschaltelement, insbesondere ein IGBT oder ein Leistung-MOSFET. Zweckmäßigerweise weist der Stromrichter eine primärseitige Steuereinrichtung auf, welche zur Erzeugung der Ansteuersignale und/oder der Hilfsinformation in Abhängigkeit von Betriebsparametern des Stromrichters ausgebildet ist.

Gemäß einer besonders bevorzugten Ausführungsform ist die Funktionseinheit eine Treibereinrichtung, welche zur Ansteuern des wenigstens einen Leistungsschaltelements in Abhängigkeit der Ansteuersignale eingerichtet ist. Die Treibereinrichtung kann insbesondere für jedes Leistungsschaltelement eine Treibereinheit umfassen, die zum Ansteuern eines Leistungsschaltelements eingerichtet ist.

Dabei ist es besonders bevorzugt, wenn die Treibereinrichtung eine einem Steuereingang eines Leistungsschaltelements vorgeschalte Widerstandseinheit aufweist, deren Widerstandswert durch das Nutzsignal veränderbar ist. Alternativ kann die Treibereinrichtung eine einem Steuereingang eines Leistungsschaltelements vorgeschaltete Ansteuereinheit mit Stromquellencharakteristik aufweisen, deren Stromwert und/oder Stromprofil durch das Nutzsignal veränderbar ist. So lässt sich mittels der Hilfsinformation eine Schaltgeschwindigkeit der Leistungsschaltelemente vorgeben.

Vorteilhafterweise weist der Stromrichter ferner eine die Primärseite und die Sekundärseite zumindest teilweise galvanisch trennende Übertragungseinrichtung auf, über welche die Ansteuersignale auf die Sekundärseite übertragbar sind. Es wird mithin vorgeschlagen, für die Übertragung der Ansteuersignale eine dedizierte Übertragungseinrichtung vorzusehen. Dies ermöglicht eine besonders einfache Nachrüstung herkömmlicher Stromrichter, da die Integration der Hilfsinformationsübertragung und der Leistungsübertragung die Übertragung der Ansteuersignale, die typischerweise höheren Sicherheitsansprüchen genügen muss, unberührt lässt.

Daneben kann vorgesehen sein, dass der erfindungsgemäße Stromrichter als Wechselrichter ausgebildet und die Leistungseinheit zum sekundärseitigen Wandeln einer Eingangsgleichspannung in eine Ausgangswechselspannung eingerichtet ist. Alternativ kann der erfindungsgemäße Stromrichter als Gleichspannungswandler ausgebildet die Leistungseinheit zum sekundärseitigen Wandeln einer Eingangsgleichspannung in eine Ausgangsgleichspannung eingerichtet sein. Die erfindungsgemäße Hilfsinformationsübertragung lässt sich mithin bei einem breiten Spektrum von Stromrichtertypen realisieren. Als weitere Alternative ist es möglich, dass der Stromrichter als aktiver Gleichrichter ausgebildet und die Leistungseinheit zum Wandeln einer Eingangswechselspannung in eine Ausgangsgleichspannung eingerichtet ist.

Daneben betrifft die Erfindung ein Fahrzeug, umfassend einen erfindungsgemäßen Stromrichter. Wenn der Stromrichter als Wechselrichter ausgebildet ist, kann dieser beispielsweise zum Wandeln einer von einer Hochvoltquelle bereitgestellten Eingangsgleichspannung in eine zur Versorgung der elektrischen Maschine vorgesehene Wechselspannung eingerichtet sein. Der Stromrichter kann beispielsweise eine elektrische Maschine zum Antreiben des Fahrzeugs versorgen. Wenn der Stromrichter als Gleichspannungswandler oder als aktiver Gleichrichter ausgebildet ist, kann er beispielsweise als Ladeeinrichtung zum Aufladen einer Fahrzeugbatterie eingerichtet sein. Das Fahrzeug kann ein Landfahrzeug, insbesondere ein Personenwagen oder Lastwagen, oder ein Wasserfahrzeug oder ein Luftfahrzeug sein.

Die der Erfindung zugrunde liegende Aufgabe wird ferner durch ein Verfahren gemäß Anspruch 14 gelöst.

Sämtliche Ausführungen zum erfindungsgemäßen Stromrichter lassen sich analog auf das erfindungsgemäße Fahrzeug und das erfindungsgemäße Verfahren übertragen, sodass auch mit diesen die zuvor genannten Vorteile erzielt werden können.

Weitere Vorteile und Einzelheiten der Erfindung ergeben sich aus den im folgenden beschriebenen Ausführungsbeispielen sowie anhand der Zeichnungen. Diese sind schematische Darstellungen und zeigen:

Fig. 1     ein Schaltbild eines Ausführungsbeispiels des erfindungsgemäßen Stromrichters;

Fig. 2     Verläufe eines Abbilds einer Sekundärspannung und von Nutzsignalen über der Zeit beim Betrieb des in Fig. 1 gezeigten Stromrichters;

Fig. 3     Spannungswerte eines analogen Nutzsignals bei unterschiedlichen Informationszuständen zugeordneten Frequenzen des Taktsignals des in Fig. 1 gezeigten Stromrichters;

Fig. 4     ein Schaltbild einer Monoflopeinheit gemäß einem weiteren Ausführungsbeispiel des erfindungsgemäßen Stromrichters;

Fig. 5 bis 7     jeweils ein Blockschaltbild einer Demodulationseinheit gemäß einem weiteren Ausführungsbeispiel des erfindungsgemäßen Stromrichters;

Fig. 8     ein Schaltbild eines Filterelements der in Fig. 7 gezeigten Demodulationseinheit;

Fig. 9     ein Schaltbild eines Filterelements gemäß einem weiteren Ausführungsbeispiel des erfindungsgemäßen Stromrichters;

Fig. 10     einen Betragsfrequenzgang der in Fig. 8 und 9 gezeigten Filterelemente;

Fig. 11     ein Schaltbild einer Leistungsübertragungseinrichtung gemäß einem weiteren Ausführungsbeispiel des erfindungsgemäßen Stromrichters;

Fig. 12     Spannungsübersetzungsverhältnisse bezüglich Ein- und Ausgangsspannung über eine normierte Schaltfrequenz der in Fig. 11 gezeigten Leistungsübertragungseinrichtung; und

Fig. 13     ein Ausführungsbeispiel eines erfindungsgemäßen Fahrzeugs.

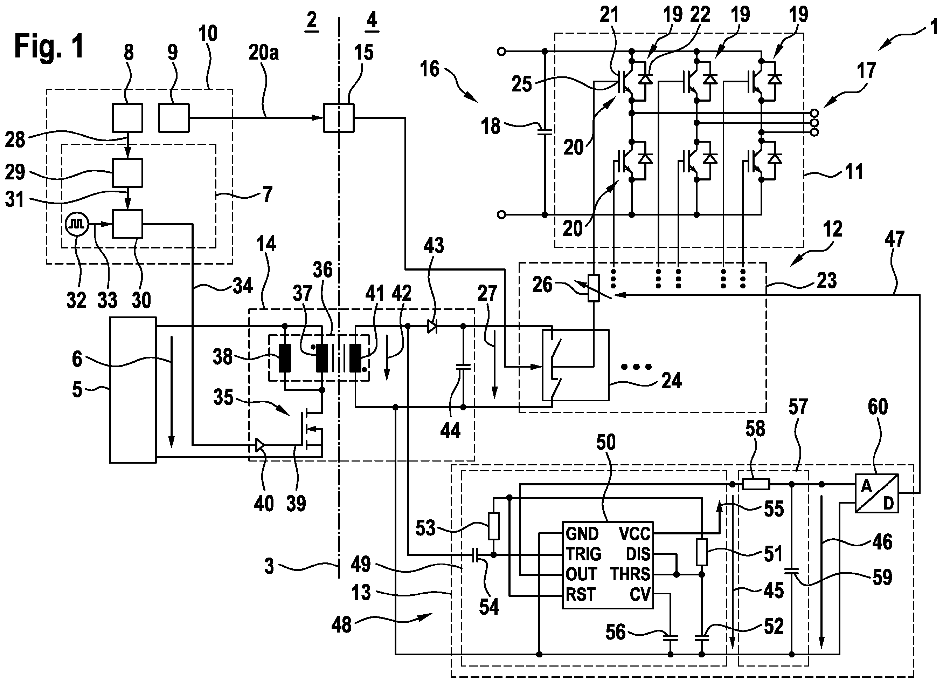

Fig. 1 ist ein Schaltbild eines Ausführungsbeispiels eines Stromrichters 1 mit einer Primärseite 2 und einer davon durch ein Isolationsbarriere 3 getrennten Sekundärseite 4.

Primärseitig umfasst der Stromrichter 1 eine Spannungsversorgungseinrichtung 5, welche zum Bereitstellen einer Versorgungsspannung 6 eingerichtet ist, eine Modulationseinrichtung 7, und zwei Steuereinheiten 8, 9. Die Modulationseinrichtung 7 und die Steuereinheiten 8, 9 sind in diesem Ausführungsbeispiel in einer durch einen Mikrocontroller realisierten Steuereinrichtung 10 implementiert. Sekundärseitig weist der Stromrichter 1 eine Leistungseinheit 11, eine Funktionseinheit 12 sowie eine Demodulationseinrichtung 13 auf. Die Isolationsbarriere 3 ist durch eine Leistungsübertragungseinrichtung 14 sowie durch eine Übertragungseinrichtung 15, beispielsweise in Form eines Optokopplers oder eines induktiven Übertragers, realisiert. Mithin können die Leistungsübertragungseinrichtung 14 und die Übertragungseinrichtung 15 sowohl der Primärseite 2 als auch Sekundärseite 4 zugeordnet werden.

Im vorliegenden Ausführungsbeispiel ist der Stromrichter 1 als Wechselrichter ausgebildet, sodass die Leistungseinheit 11 zum sekundärseitigen Wandeln einer Eingangsgleichspannung an einem Eingang 16 des Stromrichters 1 in eine Ausgangswechselspannung an einem Ausgang 17 des Stromrichters 1 eingerichtet ist. Zwischen dem Eingang 16 und der Leistungseinheit 11 weist der Stromrichter 1 einen Zwischenkreiskondensator 18 auf. Die Leistungseinheit 11 umfasst mehrere zu Halbbrücken 19 verschaltete Leistungsschaltelemente 20, die jeweils einen IGBT 21 mit einer parallel geschalteten Diode 22 oder einen Leistungs-MOSFET aufweisen.

Zur Ansteuerung eines jeweiligen Leistungsschaltelements 20 ist die zweite Steuereinheit 9 dazu eingerichtet, Ansteuersignale 20a zu erzeugen, die über die Übertragungseinrichtung 15 auf die Sekundärseite übertragen werden und dort mittels einer Treibereinrichtung 23 auf geeignete Schaltspannungsniveaus zum Schalten der Leistungsschaltelemente 20 verstärkt werden.

Die Treibereinrichtung 23, welche im vorliegenden Fall die Funktionseinheit 12 ausbildet, umfasst für jedes Leistungsschaltelement 20 eine Treibereinheit 24 in Form einer Push-Pull-Endstufe und eine zwischen einen Steuereingang 25 eines jeweiligen Leistungsschaltelements 20 und das Treibereinheit 24 geschalteten Widerstandseinheit 26, deren Widerstandswert veränderbar ist. Mittels des veränderlichen Widerstandswerts lässt sich eine Schaltgeschwindigkeit des Leistungsschaltelements 20 einstellen. Zur Versorgung der Funktionseinheit 12 bzw. der Treibereinrichtung 23 mit einer Betriebsspannung 27 ist die Treibereinrichtung 23 sekundärseitig mit der Leistungsübertragungseinrichtung 14 verbunden. Diese stellt folglich die zuvor genannten Schaltspannungsniveaus galvanisch getrennt von der Primärseite 2 als gewandelte Versorgungsspannung 6 bereit.

Die Einstellung des Widerstandswerts der Widerstandseinheit 26 erfolgt durch eine Hilfsinformation 28, welche zwei oder mehr Informationszustände annehmen kann und mittels der ersten Steuereinheit 8 primärseitig in Abhängigkeit von Betriebsparametern des Stromrichters 1 ermittelt wird. Zur Übertragung der Hilfsinformation 28 von der Primärseite 2 auf die Sekundärseite 4 wird auf eine weitere Übertragungseinrichtung analog zu der Übertragungseinrichtung 12 für die Ansteuersignale verzichtet. Stattdessen wird die Hilfsinformation 28, welche mehrere Informationszustände einnehmen kann, mittels der Modulationseinrichtung 7 frequenzmoduliert, mittels der Leistungsübertragungseinrichtung 14 über die Isolationsbarriere 3 übertragen und mittels der Demodulationseinrichtung 13 sekundärseitig zurückgewonnen.

Die Modulationseinrichtung 7 weist eine Codiereinheit 29 auf, welche die Informationsstände codiert und einer Modulationseinheit 30 ein die Hilfsinformation 28 repräsentierendes codiertes Signal 31 bereitstellt. In Abhängigkeit des codierten Signals 31 erfolgt durch die Modulationseinheit 30 eine Frequenzmodulation eines von einer Signalgeneratoreinheit 32 bereitgestellten Trägersignals 33. Ausgangsseitig stellt die Modulationseinheit 30 ein Taktsignal 34 bereit, welches der Leistungsübertragungseinrichtung 14 bereitstellbar ist.

Die Leistungsübertragungseinrichtung 14 ist vorliegend als Sperrwandler (Flyback-Converter) ausgebildet und umfasst eine Schalteinheit 35 und eine induktive Übertragereinheit 36, welche abschnittsweise die Primärseite 2 und die Sekundärseite 4 induktiv koppelt. Auf der Primärseite der Leistungsübertragungseinrichtung 14 ist parallel zu einer Primärwicklung 37 der Übertragereinheit 36 eine Hauptinduktivität 38 modelliert. Die Schalteinheit 35 erhält an ihrem Steuereingang 39 das mittels eines Treibers 40 verstärkte Taktsignal 34. Die Modulationseinrichtung 7 ist dabei derart eingerichtet, dass das Taktsignal 34 einen kontinuierlichen Betrieb der Leistungsübertragungseinrichtung 14 bewirkt. Dadurch ist eine über einer Sekundärwicklung 41 der Übertragereinheit 36 abfallende Sekundärspannung 42 im Wesentlichen unabhängig von der infolge der Modulation veränderlichen Frequenz des Taktsignals 34. Sekundärseitig weist die Leistungsübertragungseinrichtung 14 ferner eine Gleichrichtereinheit 43 in Form einer Diode und eine Glättungseinheit 44 in Form eines Kondensators auf, welche die gleichgerichtete Sekundärspannung 42 glättet und so die Betriebsspannung 27 für die Funktionseinheit 12 bzw. die Treibereinrichtung 23 bereitstellt.

Die sekundärseitige Demodulationseinrichtung 13 ist zum Erzeugen von Nutzsignalen 45, 46, 47, welche jeweils die Hilfsinformation repräsentieren, eingerichtet. Dazu ist ein Eingang 48 der Demodulationseinrichtung 13 mit der Leistungsübertragungseinrichtung 14 verbunden, sodass die Sekundärspannung 42 am Eingang 48 anliegt.

Die Demodulationseinrichtung 13 umfasst eine Demodulationseinheit in Form einer Monoflopeinheit 49, welche die Sekundärspannung 42 als Eingangssignal erhält. Im vorliegenden Ausführungsbeispiel ist die Monoflopeinheit 49 durch ein beschaltetes Timerelement 50 in Form eines integrierten NE555-Bausteins ausgebildet. Die Monoflopeinheit 49 ist dadurch so konfiguriert, dass ihre Haltezeit geringer als die kürzeste Periodendauer des Taktsignals 34 ist, der ein Informationszustand der Hilfsinformation 28 zugeordnet ist. Die Haltezeit ergibt sich hier durch die Beschaltung eines Schwellwertanschlusses THRS des Timerelements 50 mit einem aus einem Widerstand 51 und einem Kondensator 52 gebildeten RC-Glied gemäß der Formel

$$t_{on} = \ln(3) \cdot R \cdot C,$$

wobei $t_{on}$ die Haltezeit, der Operator $\ln(\cdot)$ den natürlichen Logarithmus, R den Widerstandswert des Widerstands 51 und C die Kapazität des Kondensators 52 beschreiben.

Der Anschluss VCC des Timerelements 50 ist an eine Betriebsspannung 55, die der Betriebsspannung 27 entsprechen kann, angeschlossen. Ein zusätzliches, an einen Triggeranschluss TRIG angeschlossenes RC-Glied aus einem Widerstand 53 und einem Kondensator 54 bildet einen Hochpass und differenziert die Sekundärspannung 42 zu Nadelimpulsen. Daneben ist ein Steueranschluss CV des Timerelements 50 mit einem weiteren, gegen Masse geschalteten Kondensator 56 verbunden, um ein Oszillieren des Timerelements 50 zu vermeiden.

Die Monoflopeinheit 49 erzeugt so bei jeder steigenden fallenden Flanke der Sekundärspannung 42 - und entsprechend bei jeder steigenden Flanke des Taktsignals 34 - einen Rechteckimpuls von der Dauer der Haltezeit, wobei zeitliche Abstände zwischen zwei Rechteckimpulsen von der Periodendauer des Taktsignals 34 und damit von der Hilfsinformation 28 abhängig sind. An einem Ausgangsanschluss OUT des Timerelements 50 kann mithin das pulsmodulierte Nutzsignal 45 abgegriffen werden.

Die Demodulationseinrichtung 13 umfasst darüber hinaus eine der Demodulationseinrichtung 49 nachgeschaltete Tiefpasseinheit 57, die vorliegend aus einem einen Widerstand 58 und einen Kondensator 59 aufweisenden RC-Glied gebildet sind. Die Tiefpasseinheit glättet das pulsmodulierte Nutzsignal 45 und stellt daraus das analoge Nutzsignal 46, dessen Spannung einem jeweiligen Informationszustand der Hilfsinformation 28 entspricht, bereit.

Daneben umfasst die Demodulationseinrichtung 13 eine Analog-Digital-Umsetzereinheit 60, welche der Tiefpasseinheit 57 nachgeschaltet ist und das analoge Nutzsignal 46 in das digitale Nutzsignal 47 umsetzt. Das digitale Nutzsignal 47 repräsentiert folglich die Hilfsinformation 28 und dient zur Einstellung der Widerstandseinheit 26 der Treibereinrichtung 23. Folglich kann die Hilfsinformation 28 ohne eine zusätzliche Übertragungseinrichtung mittels der Übertragereinheit 36 von der Primärseite 2 auf die Sekundärseite 4 übertragen werden.

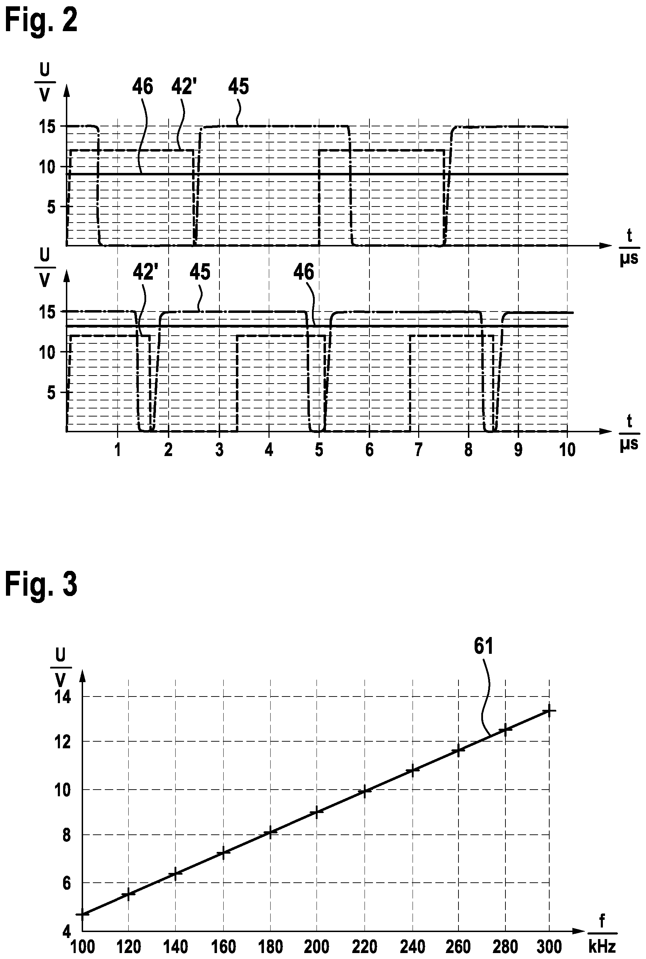

Fig. 2 zeigt Verläufe eines Abbilds 42' der Sekundärspannung 42, des pulsmodulierten Nutzsignals 45 und des analogen Nutzsignals 46 über der Zeit t, wobei sich die im oberen Diagramm dargestellten Verläufe auf ein Taktsignal 34 mit einer Frequenz von 200 kHz und die unteren Verläufe auf ein Taktsignal 34 mit einer Frequenz von 300 kHz beziehen.

Den Verläufen der Nutzsignale 45, 46 liegt ferner eine Konfiguration der in Fig. 1 gezeigten Demodulationseinrichtung 13 zugrunde, bei welcher der Widerstandswert des Widerstands 51 27 kΩ und der Kapazitätswert des Kondensators 52 100 pF beträgt, sodass sich gemäß der vorgenannten Formel eine Haltezeit von ca. 3,0 $\mu$s ergibt. Der Widerstandswert des Widerstands 53 beträgt 4,7 kΩ, der Kapazitätswert des Kondensators 54 10 pF und der Kapazitätswert der Kapazität 56 10 nF. Bei der Tiefpasseinheit 57 weist der Widerstand 58 einen Widerstandswert von 160 kΩ und der Kondensator 59 einen Kapazitätswert von 1 nF auf, sodass sich eine Grenzfrequenz des RC-Glieds von ca. 0,995 kHz ergibt. Die Betriebsspannung 55 beträgt 15 V. Ersichtlich wird so aus dem pulsmodulierten Nutzsignal 45 ein hinreichend konstantes analoges Nutzsignal 46, welches bei einer Frequenz des Taktsignals 34 von 200 kHz ca. 9 V und bei einer Frequenz des Taktsignals 34 von 300 kHz ca. 13 V beträgt. Ersichtlich nutzt die Monoflopeinheit 49 eine fallende Flanke als Trigger.

Fig. 3 zeigt diesen Zusammenhang zwischen einer Frequenz f des Taktsignals 34 und einer Spannung U des analogen Nutzsignals 46. Ersichtlich ergibt sich ein nahezu linearer Verlauf, der mit einem beispielhaften Diskretisierungsabstand von ca. 1,1 V eine Übertragung von acht Informationszuständen in für den kontinuierlichen Betrieb der Leistungsübertragungseinrichtung 14 typischen Größenordnungen der Taktfrequenz 34 ermöglicht. Der lineare Verlauf ist durch eine Ausgleichsgerade 61 approximiert, die durch die Funktion

$$U(f)/V = 0{,}0442 \cdot f/kHz + 0{,}176$$

beschrieben wird. Ersichtlich beträgt der Spannungshub zwischen der minimalen und der maximalen Schaltfrequenz ca. 8,8 V.

Im Folgenden werden weitere Ausführungsbeispiele des Stromrichters 1 beschrieben, wobei gleiche oder gleichwirkende Komponenten mit identischen Bezugszeichen versehen sind. Sofern nichts Abweichendes beschrieben ist, gelten die vorangegangenen Ausführungen auch für die weiteren Ausführungsbeispiele.

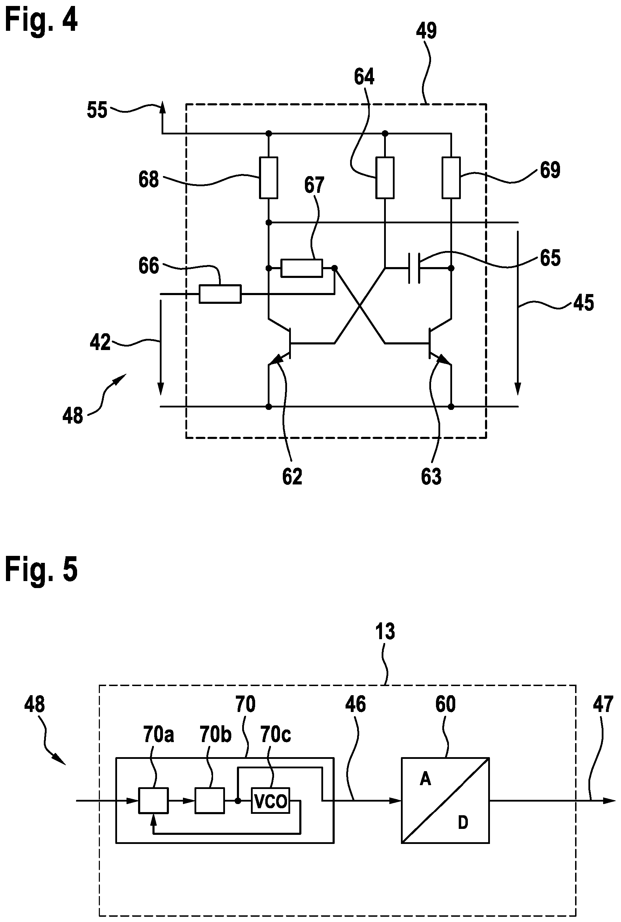

Fig. 4 ist ein Schaltbild einer Monoflopeinheit 49 gemäß einem weiteren Ausführungsbeispiel des erfindungsgemäßen Stromrichters 1, bei dem anstelle des Timerelements 50 eine diskrete Transistorschaltung zum Einsatz kommt.

Dazu weist die Monoflopeinheit 49 zwei Transistoren 62, 63 auf, die hier exemplarisch als npn-Bipolartransistoren vom Typ BC547C ausgebildet sind. Die Haltezeit der Monoflopeinheit 49 wird durch einen Widerstand 64, und einen Kondensator 65, die an einen Steueranschluss des Transistors 62 angeschlossen sind, bestimmt. Über einen weiteren Widerstand 66 wird die Sekundärspannung 42 am Eingang 48 dem Steueranschluss des Transistors 63 zugeführt. Daneben sind weitere Widerstände 68, 69, welche die Transistorschaltung mit der Betriebsspannung 55 verbinden, und ein Widerstand 67 vorgesehen.

Über die Dimensionierung des Widerstands 64 und des Kondensators 65 kann gemäß der Formel

$$t_{on} = \ln(2) \cdot R \cdot C,$$

die Haltezeit $t_{on}$ vorgegeben werden, wobei R den Widerstandswert des Widerstands 64 und C die Kapazität des Kondensators 65 beschreibt. Bei einer exemplarischen Konfiguration eines Widerstandswerts von 18 kΩ für den Widerstand 64 und eines Kapazitätswerts von 220 pF für den Kondensator 65 ergibt sich so eine Haltezeit von ca. 2,7 $\mu$s. Die weiteren Widerstandswerte sind 10 kΩ (Widerstände 66, 67) und 1 kΩ (Widerstände 68, 69).

Fig. 5 ist ein Blockschaltbild einer Demodulationseinrichtung 13 gemäß einem weiteren Ausführungsbeispiel des Stromrichters 1, wobei anstelle der Monoflopeinheit 49 und der Tiefpasseinheit 57 eine PLL-Einheit 70 vorgesehen ist.

Die PLL-Einheit 70 umfasst einen Phasenkomparator 70a, ein Schleifenfilter 70b und einen spannungsgesteuerten Oszillator 70c. Dabei erhält der Phasenkomparator am Eingang 48 die Sekundärspannung 42. Als analoges Nutzsignal 46 wird - ein Eingangssignal des spannungsgesteuerten Oszillators 70c bzw. ein Ausgangssignal des Schleifenfilters 70b abgegriffen.

Die PLL-Einheit 70 erlaubt es, einen vergleichsweise großen Wertebereich bzw. eine große Zahl von Informationsständen der Hilfsinformation 28 zu übertragen und dabei eine kürzere Übertragungszeit als bei den zuvor beschriebenen Ausführungsbeispielen zu realisieren. Dadurch können auch kleine Frequenzänderungen zu einer relativ großen Änderung des analogen Nutzsignals 46 führen, was eine höhere Empfindlichkeit bewirkt. So kann einerseits die benötigte Frequenzvariation durch die Modulationseinheit 7 (siehe Fig. 1) minimiert und andererseits die Mittelwertbildung durch die Tiefpasseinheit 57 entfallen. Um die PLL-Einheit 70 mit geringem Schaltungsaufwand zu realisieren, ist diese als kosten- und bauraumsparender integrierter Schaltkreis realisiert. Mittels der Analog-Digital-Umsetzereinheit 60 wird das analoge Nutzsignal 46 der PLL-Einheit 70 in das digitale Nutzsignal 47 umgesetzt.

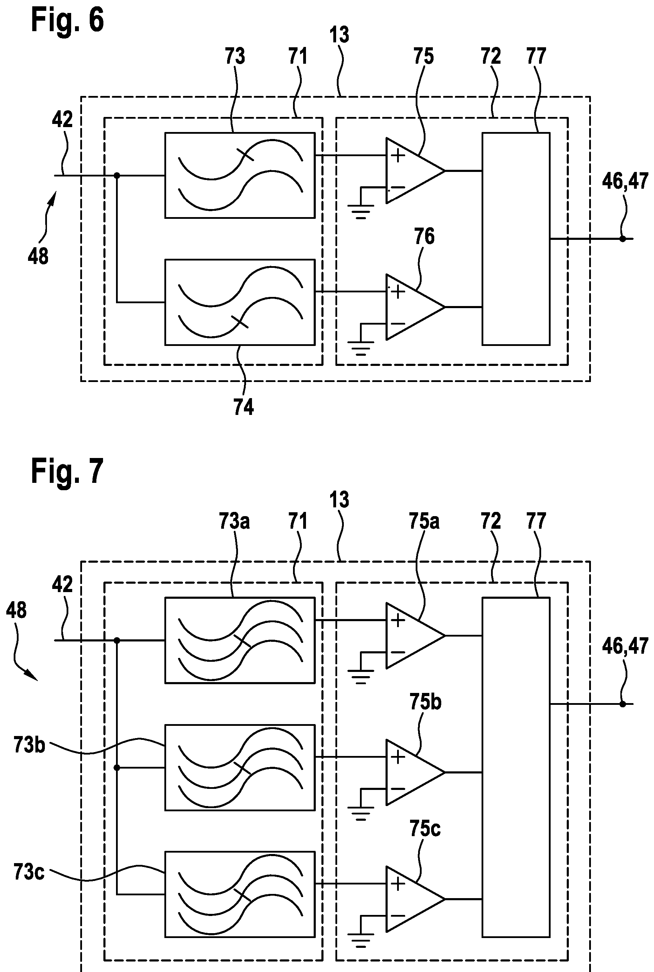

Fig. 6 ist ein Blockschaltbild einer Demodulationseinrichtung 13 gemäß einem weiteren Ausführungsbeispiel des Stromrichters 1, welche durch eine Filtereinheit 71 und eine Entscheidungseinheit 72 ausgebildet ist.

Die Filtereinheit 71 umfasst ein als Tiefpass ausgebildetes Filterelement 73 und ein als Hochpass ausgebildetes Filterelement 74. Die Grenzfrequenzen der Filterelemente 73, 74 sind derart gewählt, dass sie zwischen zwei jeweils einem Informationszustand der Hilfsinformation 28 zugeordneten Frequenzen des Taktsignals 34 liegen. Die Entscheidungseinheit 72 weist für jedes Filterelement 73 einen Komparator 75, 76 auf, welcher jeweils ein Signal an ein Selektionselement 77 ausgibt, wenn das vorgeschaltete Filterelement 73, 74 spektrale Anteile der am Eingang 48 anliegenden Sekundärspannung 42 (siehe Fig. 1) passieren lässt. Das Selektionselement 77 kann entweder als Multiplexer eingerichtet sein und das digitale Nutzsignal 47 bereitstellen oder als Analogschaltung eingerichtet sein und das analoge Signal 46 bereitstellen. Durch die in Fig. 6 gezeigte Demodulationseinrichtung 13 besteht eine weitere, mit geringem Schaltungsaufwand realisierbare Möglichkeit zur Demodulation einer dreiwertigen Hilfsinformation 28.

Fig. 7 ist ein Blockschaltbild einer Demodulationseinrichtung 13 gemäß einem weiteren Ausführungsbeispiel des Stromrichters 1, welche wie das in Fig. 6 gezeigte Ausführungsbeispiel eine Filtereinheit 71 und eine Entscheidungseinheit 72 aufweist.

Die Filtereinheit 71 umfasst hier drei oder mehr Filterelemente 73a-73c in Form von Bandsperrfiltern (Kerbfilter), deren Ausgangssignal davon abhängig ist, ob die am Eingang 48 anliegenden Sekundärspannung 42 in einem Passband bzw. einem Stoppband liegt. Die Entscheidungseinheit 72 weist dementsprechend eine der Anzahl von Filterelementen 73a-73c entsprechende Anzahl von Komparatoren 75a-75c auf.

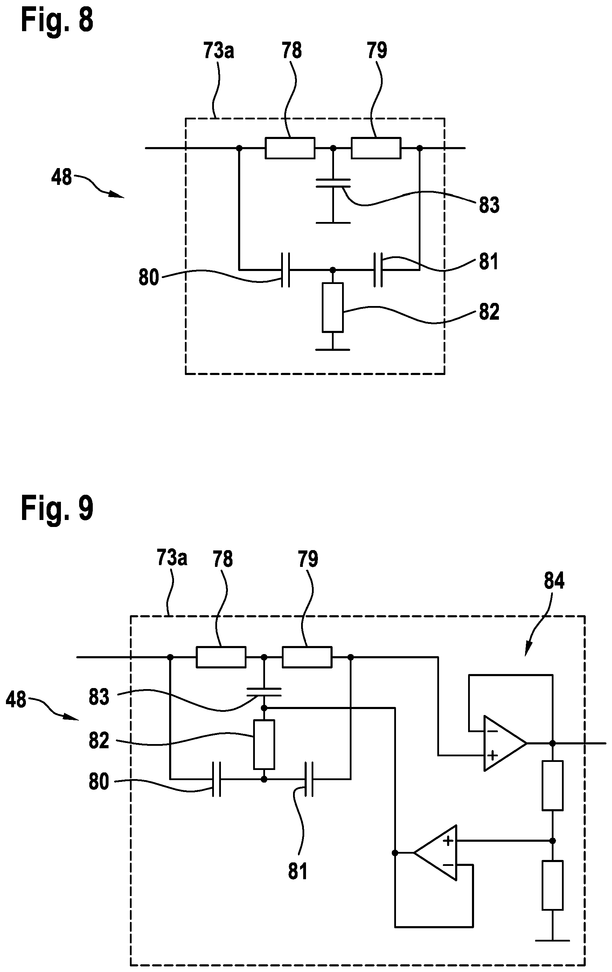

Fig. 8 ist ein Schaltbild eines Filterelements 73a, welches als passives Kerbfilter ausgebildet ist.

Das Filterelement 73a weist längs geschaltete Widerstände 78, 79, längs geschaltete Kondensatoren 80, 81, einen quer geschalteten Widerstand 82 und einen quer geschalteten Kondensator 83 auf. Um eine Sperrfrequenz von 300 kHz zu realisieren, sind die Widerstandswerte zu 7,5 kΩ (Widerstände 78, 79) und 1,8 kΩ (Widerstand 82) und die Kapazitätswerte der Kondensatoren 80, 81, 83 zu jeweils 100 pF gewählt.

Fig. 9 zeigt eine Filtereinheit 73a gemäß einem weiteren Ausführungsbeispiel des Stromrichters 1 mit der in Fig. 7 gezeigten Demodulationseinrichtung 13. Im Vergleich zu Fig. 8 ist hier ein aktives Kerbfilter realisiert, welches zusätzlich eine Doppeloperationsverstärkerschaltung 84 aufweist. Die Widerstände 78, 79, 82 und die Kondensatoren 80, 81, 83 sind wie zu Fig. 8 beschrieben dimensioniert.

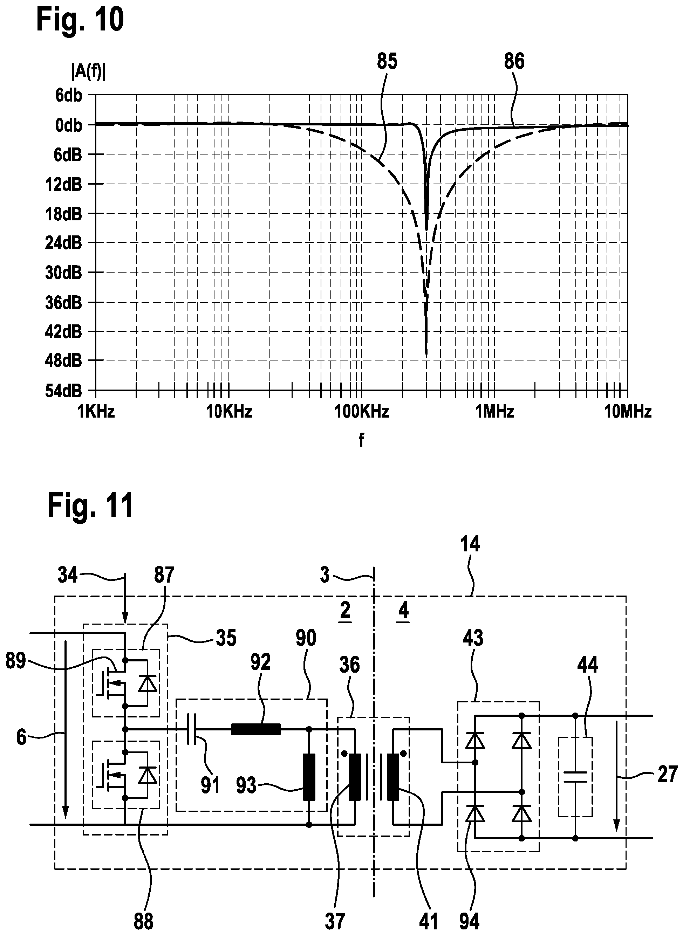

Fig. 10 zeigt einen Betragsfrequenzgang 85 des in Fig. 8 gezeigten Filterelements 73a und einen Betragsfrequenzgang 86 des in Fig. 9 gezeigten Filterelements 73a, jeweils in einer Konfiguration mit einer Sperrfrequenz von 300 kHz. Ersichtlich realisiert der Frequenzgang 86 eine wesentlich höhere Flankensteilheit bzw. eine verbesserte Frequenzselektivität, was eine sicherere Detektion des Informationszustands der Hilfsinformation 28 ermöglicht, selbst wenn ein engerer Wertebereich von Frequenzen des Taktsignals 34 demoduliert wird.

Die Filterelemente 73b, 73c in Fig. 7 können analog zu dem zuvor beschriebenen Filterelement 73a mit einer an eine andere Sperrfrequenz angepassten Dimensionierung realisiert werden.

Gemäß weiteren Ausführungsbeispielen ist es auch denkbar, die Filterelemente 73, 74 gemäß Fig. 6 mit den Filterelementen 73a-73c gemäß Fig. 7 zu kombinieren, beispielsweise anstelle des Filterelements 73 a für die niedrigste Frequenz des Taktsignals 34 das als Tiefpass ausgebildete Filterelement 73 und/oder anstelle des Filterelements 73c für die höchste Frequenz des Taktsignals 34 das als Hochpass ausgebildete Filterelement 74 vorzusehen. Gemäß einem weiteren Ausführungsbeispiel sind die Filterelemente 73a-73c Bandpassfilter. Gemäß einem weiteren Ausführungsbeispiel sind alle Filterelemente 73a-73c Tiefpassfilter oder Hochpassfilter, wobei das Selektionselement 77 als 1-aus-n-Dekoder ausgebildet ist.

Fig. 11 ist ein Schaltbild einer Leistungsübertragungseinrichtung 14 gemäß einem weiteren Ausführungsbeispiel des Stromrichters 1, wobei die Leistungsübertragungseinrichtung 14 durch einen lastresonanten LLC-Wandler statt durch einen Sperrwandler realisiert ist.

Die Schalteinheit 35 ist durch eine Halbbrücke aus zwei Leistungsschaltelementen 87, 88 gebildet, die jeweils durch einen Leistungs-MOSFET 89 oder alternativ durch einen IGBT oder Bipolartransistor (BJT) realisiert und durch das Taktsignal 34 ansteuerbar sind. Daneben weist die Steuerungseinrichtung 14 auf der Primärseite 2 eine Resonanzkreiseinheit 90 mit einer Reihenschaltung aus einem Kondensator 91 und einer Induktivität 92 sowie einer parallel zur Primärwicklung 37 der Übertragereinheit 36 geschalteten Magnetisierungsinduktivität 93 auf. Sekundärseitig ist die Gleichrichtereinheit 43 durch einen aus mehreren Dioden 94 aufgebauten Brückengleichrichter realisiert.

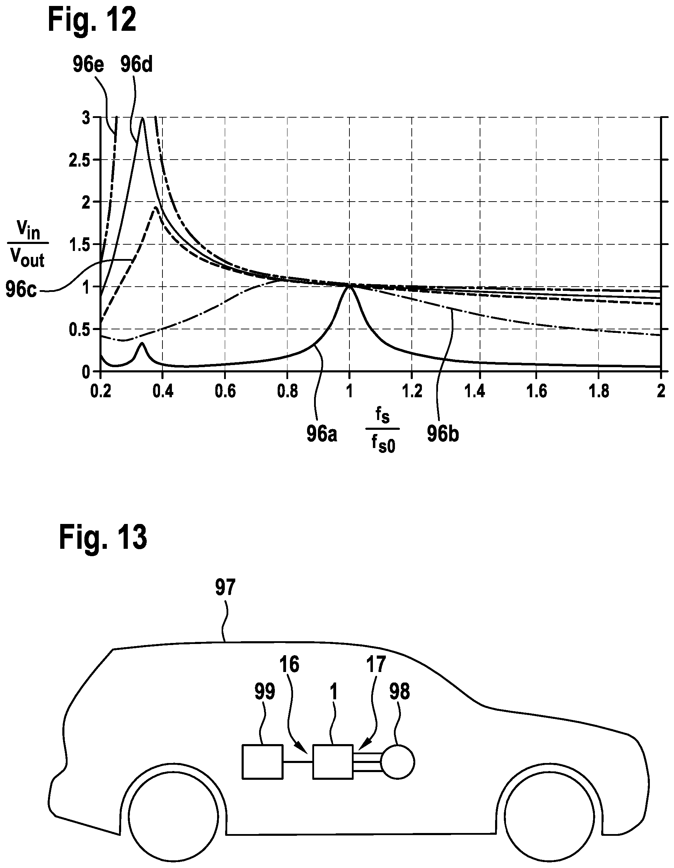

Fig. 12 zeigt Spannungsübersetzungsverhältnisse 96a-96e bezüglich Ein- und Ausgangsspannungen ($V_{out}/V_{in}$) über eine normierte Schaltfrequenz ($f_s/f_{s0}$).

Dabei beschreibt das Spannungsübersetzungsverhältnis bezüglich Ein- und Ausgangsspannung das Verhältnis zwischen der Versorgungsspannung 6 und der Betriebsspannung 27. Die normierte Schaltfrequenz beschreibt das Verhältnis der Frequenz des Taktsignals 34 zur Resonanzfrequenz des aus dem Kondensator 91 und der Induktivitäten 92 gebildeten Reihenschwingkreises. Die Spannungsübersetzungsverhältnisse 96a-96e beziehen sich auf unterschiedliche normalisierte Lastwiderstände $Q_L$, die das Verhältnis einer ohmschen Last der Leistungsübertragungseinrichtung 40 zur charakteristischen Impedanz

$$Z_L = \sqrt{\frac{L}{C}}$$

beschreiben, wobei L den Induktivitätswert der Induktivität 92 und C den Kapazitätswert des Kondensators 91 beschreiben. Dabei liegen dem Spannungsübersetzungsverhältnis 96a $Q_L = 0,1$, dem Spannungsübersetzungsverhältnis 96b $Q_L = 1$, dem Spannungsübersetzungsverhältnis 96c $Q_L = 5$, dem Spannungsübersetzungsverhältnis 96d $Q_L = 10$ und dem Spannungsübersetzungsverhältnis 96e $Q_L \rightarrow \infty$ zugrunde.

Wie aus Fig. 12 ersichtlich ist, ermöglicht die lastresonante Leistungsübertragungseinrichtung 14 bei hinreichend großen normierten Lastwiderständen, wie sie typischerweise beim Betrieb des Stromrichters 1 auftreten, über weite Bereiche der normierten Schaltfrequenz einen frequenzinvarianten Betrieb. Dementsprechend ist die Modulationseinrichtung 7 dazu eingerichtet, die Frequenz des Taktsignals 34 derart vorzugeben, dass sie mindestens der Resonanzfrequenz der Leistungsübertragungseinrichtung 14 entspricht. So kann analog zur kontinuierlichen Betrieb der hartschaltenden Leistungsübertragungseinrichtung 14 gemäß Fig. 1 eine Übertragung der Hilfsinformation 28 realisiert werden, ohne dass die Betriebsspannung 27 nennenswert beeinträchtigt wird.

Gemäß einem weiteren nicht gezeigten Ausführungsbeispiel weist die Treibereinrichtung 23 statt der Widerstandeinheit 26 eine einem Steuereingang 25 eines Leistungsschaltelements 20 vorgeschaltete Ansteuereinheit mit Stromquellencharakteristik auf, deren Stromwert durch das Nutzsignal veränderbar ist.

Fig. 13 ist eine Prinzipskizze eines Ausführungsbeispiels eines Fahrzeugs 97, umfassend eine elektrische Maschine 98, die an den Ausgang 17 eines Stromrichters 1 gemäß einem der zuvor beschriebenen Ausführungsbeispiele angeschlossen ist, welcher dazu eingerichtet ist, eine von einer Gleichspannungsquelle 99 am Ausgang 16 bereitgestellte Gleichspannung zur Versorgung der elektrischen Maschine 98 zu wandeln. Das Fahrzeug 97 ist hier exemplarisch als Landfahrzeug in Form eines Personenwagens ausgebildet.

In den zuvor beschriebenen Ausführungsbeispielen des Stromrichters 1 bzw. des Fahrzeugs 97 ist der Stromrichter 1 als Wechselrichter ausgebildet. Der Stromrichter 1 kann jedoch auch als Gleichspannungswandler, beispielsweise für eine Ladeeinrichtung des Fahrzeugs 97 eingerichtet sein. Gemäß einem weiteren Ausführungsbeispiel ist der Stromrichter 1 als aktiver Gleichrichter ausgebildet und die Leistungseinheit zum Wandeln einer Eingangswechselspannung in eine Ausgangsgleichspannung eingerichtet. Auch ein solcher Stromrichter kann beispielsweise in einer Ladeeinrichtung des Fahrzeugs 97 eingesetzt werden.

Ferner ist die Treibereinrichtung 23 exemplarisch als Funktionseinheit 12 gewählt. Eine Übertragung der Hilfsinformation 28 über die Leistungsübertragungseinrichtung 14 kann auch für jegliche andere sekundärseitige Funktionseinheit 12 vorgesehen sein, die in Abhängigkeit von primärseitig erzeugten Hilfsinformationen 28 betreibbar ist.

Auch wenn in den zuvor beschriebenen Ausführungsbeispielen jeweils nur das digitale Nutzsignal 47 zur Steuerung der Funktionseinheit 12 verwendet wird, können gemäß weiteren Ausführungsbeispielen selbstverständlich auch die anderen Nutzsignale 45, 46 zur Aussteuerung der Funktionseinheit 12 verwendet werden.

**Patentansprüche**

1. Stromrichter (1) mit einer Primärseite (2) und einer davon galvanisch getrennten Sekundärseite (4), umfassend

    - eine sekundärseitige Funktionseinheit (12), die in Abhängigkeit einer primärseitig erzeugten Hilfsinformation (28) betreibbar ist,
    - eine primärseitige Spannungsversorgungseinrichtung (5), die zum Bereitstellen einer Versorgungsspannung (6) eingerichtet ist,
    - eine Leistungsübertragungseinrichtung (14), die eine Schalteinheit (35) zum Schalten der Versorgungsspannung (6) und eine Übertragereinheit (36), die zum Übertragen der geschalteten Versorgungsspannung (6) auf die Sekundärseite (4) eingerichtet ist, aufweist, um die Versorgungsspannung (6) in eine Betriebsspannung (27) für die Funktionseinheit (12) zu wandeln,
- eine primärseitige Modulationseinrichtung (7), die zur Bereitstellung eines Taktsignals (34) für die Schalteinheit (35) und zum Verändern einer Frequenz des Taktsignals (34) in Abhängigkeit der Hilfsinformation (28) eingerichtet ist, und
- eine sekundärseitige Demodulationseinrichtung (13), die zum Erzeugen wenigstens eines die Hilfsinformation (28) repräsentierenden Nutzsignals (45, 46, 47) aus einer von der Übertragereinheit (36) bereitgestellten Sekundärspannung (42) und zum Bereitstellen eines Nutzsignals (47) an die Funktionseinheit (12) eingerichtet ist,

**dadurch gekennzeichnet, dass**
die Modulationseinrichtung (7) dazu eingerichtet ist, die Frequenz des Taktsignals (34) innerhalb eines Frequenzintervalls zu verändern, in welchem ein Spannungsübersetzungsverhältnis bezüglich Ein- und Ausgangsspannung der Leistungsübertragungseinrichtung (14) im Wesentlichen frequenzinvariant ist.

2. Stromrichter nach Anspruch 1, wobei

    - die Leistungsübertragungseinrichtung (14) eine hartschaltende Topologie aufweist und die Modulationseinrichtung (7) dazu eingerichtet ist, das Taktsignal (34) derart bereitzustellen, dass die Leistungsübertragungseinrichtung (14) in einem kontinuierlichen Betriebsmodus betrieben wird, oder
    - die Leistungsübertragungseinrichtung (14) eine lastresonante Topologie aufweist und die Modulationseinrichtung (7) dazu eingerichtet ist, die Frequenz derart vorzugeben, dass sie mindestens das 0,2-fache einer normierten Schaltfrequenz der Leistungsübertragungseinrichtung (14) beträgt.

3. Stromrichter nach Anspruch 1 oder 2, wobei die Demodulationseinrichtung (13) eine Monoflopeinheit (49) aufweist, deren Haltezeit geringer als die kürzeste Periodendauer des Taktsignals (34) ist, der ein Informationszustand der Hilfsinformation (28) zugeordnet ist, und die zum Bereitstellen eines pulsmodulierten Nutzsignals (45) eingerichtet ist.

4. Stromrichter nach Anspruch 3, wobei die Demodulationseinrichtung (13) eine Tiefpasseinheit (57) aufweist, welches der Monoflopeinheit (49) nachgeschaltet und zum Bereitstellen eines analogen Nutzsignals (46) aus dem pulsmodulierten Nutzsignal (45) eingerichtet ist.

5. Stromrichter nach einem der vorhergehenden Ansprüche, wobei die Demodulationseinrichtung (13) eine PLL-Einheit (70) aufweist, welche zum Bereitstellen eines analogen Nutzsignals (46) eingerichtet ist.

6. Stromrichter nach Anspruch 4 oder 5, wobei die Demodulationseinrichtung (13) eine Analog-Digital-Umsetzereinheit (60) aufweist, welche zum Umsetzen des analogen Nutzsignals (46) in ein digitales Nutzsignal (47) eingerichtet ist.

7. Stromrichter nach einem der vorhergehenden Ansprüche, wobei die Demodulationseinrichtung (13) eine Filtereinheit (71) mit wenigstens einem Filterelement (73, 73a-73c, 74) aufweist, dessen Frequenzgang derart gewählt ist, dass das Filterelement (73, 73a-73c, 74) bei einer durch die Modulationseinrichtung (7) vorgegebenen Frequenz in einem Stoppband oder einem Passband betrieben wird, wobei der Filtereinheit (71) eine das Nutzsignal (46, 47) bereitstellende Entscheidungseinheit (72) nachgestaltet ist.

8. Stromrichter nach einem der vorhergehenden Ansprüche, welcher eine sekundärseitige Leistungseinheit (11) mit wenigstens einem Leistungsschaltelement (20) aufweist, welches in Abhängigkeit von primärseitig erzeugten Ansteuersignalen ansteuerbar ist.

9. Stromrichter nach Anspruch 8, wobei die Funktionseinheit (12) eine Treibereinrichtung (23) ist, welche zur Ansteuern des wenigstens einen Leistungsschaltelements (20) in Abhängigkeit der Ansteuersignale eingerichtet ist.

10. Stromrichter nach Anspruch 9, wobei die Treibereinrichtung (23) wenigstens eine einem Steuereingang (25) eines Leistungsschaltelements (20) vorgeschalte Widerstandseinheit (26) aufweist, deren Widerstandswert durch das Nutzsignal (47) veränderbar ist, oder wobei die Treibereinrichtung (23) eine einem Steuereingang (25) eines Leistungsschaltelements vorgeschaltete Ansteuereinheit mit Stromquellencharakteristik aufweist, deren Stromwert und/oder Stromprofil durch das Nutzsignal (47) veränderbar ist.

11. Stromrichter nach einem der Ansprüche 8 bis 10, welcher eine die Primärseite (2) und die Sekundärseite (4) zumindest teilweise galvanisch trennende Übertragungseinrichtung (15) aufweist, über welche die Ansteuersignale auf die Sekundärseite (4) übertragbar sind.

12. Stromrichter nach einem der Ansprüche 8 bis 11, wobei der Stromrichter (1) als Wechselrichter ausgebildet und die Leistungseinheit (11) zum sekundärseitigen Wandeln einer Eingangsgleichspannung in eine Ausgangswechselspannung eingerichtet ist, oder wobei der Stromrichter als Gleichspannungswandler ausgebildet und die Leistungseinheit zum sekundärseitigen Wandeln einer Eingangsgleichspannung in eine Ausgangsgleichspannung eingerichtet ist, oder wobei der Stromrichter als aktiver Gleichrichter ausgebildet und die Leistungseinheit zum Wandeln einer Eingangswechselspannung in eine Ausgangsgleichspannung eingerichtet ist.

13. Fahrzeug (97), umfassend einen Stromrichter (1) nach einem der vorhergehenden Ansprüche.

14. Verfahren zum Betreiben eines Stromrichters (1) mit einer Primärseite (2) und einer davon galvanisch getrennten Sekundärseite (4), umfassend

    - eine sekundärseitige Funktionseinheit (12), die in Abhängigkeit einer primärseitig erzeugten Hilfsinformation (28) betrieben wird,
    - eine primärseitige Spannungsversorgungseinrichtung (5), die eine Versorgungsspannung (6) bereitstellt, und
    - eine Leistungsübertragungseinrichtung (14), die eine Schalteinheit (35) zum Schalten der Versorgungsspannung (6) und eine Übertragereinheit (36), welche die geschaltete Versorgungsspannung (6) auf die Sekundärseite (4) überträgt, aufweist, um die Versorgungsspannung (6) in eine Betriebsspannung (27) für die Funktionseinheit (12) zu wandeln,

umfassend folgende Schritte:

    - Primärseitiges Bereitstellen eines Taktsignals (34) für die Schalteinheit (35), dessen Frequenz primärseitig in Abhängigkeit der Hilfsinformation (28) innerhalb eines Frequenzintervalls, in welchem ein Spannungsübersetzungsverhältnis bezüglich Ein- und Ausgangsspannung der Leistungsübertragungseinrichtung (14) im Wesentlichen frequenzinvariant ist, verändert wird;
    - sekundärseitiges Erzeugen wenigstens eines die Hilfsinformation (28) repräsentierenden Nutzsignals (45, 46, 47) aus einer von der Übertragereinheit (36) bereitgestellten Sekundärspannung (42); und
    - sekundärseitiges Bereitstellen eines Nutzsignals (47) an die Funktionseinheit (12).

**Claims**

1. Power converter (1) with a primary side (2) and a galvanically isolated secondary side (4), comprising:

    - a secondary-side functional unit (12) that is operable depending on auxiliary information (28) generated on the primary side,
    - a primary-side power supply unit (5) configured to provide a supply voltage (6),
    - a power transmission unit (14) having a switching unit (35) for switching the supply voltage (6) and a transfer unit (36) configured to transfer the switched supply voltage (6) to the secondary side (4), to convert the supply voltage (6) into an operating voltage (27) for the functional unit (12),
    - a primary-side modulation unit (7) configured to provide a clock signal (34) for the switching unit (35) and to vary a frequency of the clock signal (34) depending on the auxiliary information (28), and
    - a secondary-side demodulation unit (13) configured to generate at least one utility signal (45, 46, 47) representing the auxiliary information (28) from a secondary voltage (42) provided by the transfer unit (36) and to provide a utility signal (47) to the functional unit (12), **characterized in that** the modulation unit (7) is configured to vary the frequency of the clock signal (34) within a frequency interval in which a voltage conversion ratio with respect to input and output voltage of the power transmission unit (14) is substantially frequency-invariant.

2. Power converter according to claim 1, wherein

    - the power transmission unit (14) has a hard-switching topology and the modulation unit (7) is configured to provide the clock signal (34) such that the power transmission unit (14) is operated in a continuous operating mode, or
    - the power transmission unit (14) has a load-resonant topology and the modulation unit (7) is configured to specify the frequency such that it is at least 0.2 times a normalized switching frequency of the power transmission unit (14).

3. Power converter according to claim 1 or 2, wherein the demodulation unit (13) comprises a monoflop unit (49) whose hold time is less than the shortest period duration of the clock signal (34) to which an information state of the auxiliary information (28) is assigned, and which is configured to provide a pulse-modulated utility signal (45).

4. Power converter according to claim 3, wherein the demodulation unit (13) comprises a low-pass unit (57) which is connected downstream of the monoflop unit (49) and is configured to provide an analog utility signal (46) from the pulse-modulated utility signal (45).

5. Power converter according to any one of the preceding claims, wherein the demodulation unit (13) comprises a PLL unit (70) which is configured to provide an analog utility signal (46).

6. Power converter according to claim 4 or 5, wherein the demodulation unit (13) comprises an analog-to-digital converter unit (60) which is configured to convert the analog utility signal (46) into a digital utility signal (47).

7. Power converter according to any one of the preceding claims, wherein the demodulation unit (13) comprises a filter unit (71) with at least one filter element (73, 73a-73c, 74), whose frequency response is selected such that the filter element (73, 73a-73c, 74) is operated in a stop band or a pass band at a frequency specified by the modulation unit (7), wherein a decision unit (72) providing the utility signal (46, 47) is connected downstream of the filter unit (71).

8. Power converter according to any one of the preceding claims, which comprises a secondary-side power unit (11) with at least one power switching element (20) which is controllable depending on control signals generated on the primary side.

9. Power converter according to claim 8, wherein the functional unit (12) is a driver unit (23) which is configured to control the at least one power switching element (20) depending on the control signals.

10. Power converter according to claim 9, wherein the driver unit (23) comprises at least one resistance unit (26) connected upstream of a control input (25) of a power switching element (20), whose resistance value is variable by the utility signal (47), or wherein the driver unit (23) comprises a control unit with current source characteristics connected upstream of a control input (25) of a power switching element, whose current value and/or current profile is variable by the utility signal (47).

11. Power converter according to any one of claims 8 to 10, which comprises a transmission unit (15) that at least partially galvanically isolates the primary side (2) and the secondary side (4), via which the control signals can be transmitted to the secondary side (4).

12. Power converter according to any one of claims 8 to 11, wherein the power converter (1) is configured as an inverter and the power unit (11) is configured for secondary-side conversion of an input DC voltage into an output AC voltage, or wherein the power converter is configured as a DC-DC converter and the power unit is configured for secondary-side conversion of an input DC voltage into an output DC voltage, or wherein the power converter is configured as an active rectifier and the power unit is configured for converting an input AC voltage into an output DC voltage.

13. Vehicle (97) comprising a power converter (1) according to any one of the preceding claims.

14. Method for operating a power converter (1) with a primary side (2) and a galvanically isolated secondary side (4), comprising:

- a secondary-side functional unit (12) that is operated depending on auxiliary information (28) generated on the primary side,
- a primary-side power supply unit (5) that provides a supply voltage (6), and
- a power transmission unit (14) having a switching unit (35) for switching the supply voltage (6) and a transfer unit (36) which transfers the switched supply voltage (6) to the secondary side (4), to convert the supply voltage (6) into an operating voltage (27) for the functional unit (12), comprising the following steps:

- providing, on the primary side, a clock signal (34) for the switching unit (35), whose frequency is varied on the primary side depending on the auxiliary information (28) within a frequency interval in which a voltage conversion ratio with respect to input and output voltage of the power transmission unit (14) is substantially frequency-invariant;
- generating, on the secondary side, at least one utility signal (45, 46, 47) representing the auxiliary information (28) from a secondary voltage (42) provided by the transfer unit (36); and
- providing, on the secondary side, a utility signal (47) to the functional unit (12).

**Revendications**

1. Convertisseur de puissance (1) comprenant un côté primaire (2) et un côté secondaire (4) isolé galvaniquement de celui-ci, comprenant :

- une unité fonctionnelle côté secondaire (12) qui peut être exploitée en fonction d'une information auxiliaire (28) générée du côté primaire,
- une unité d'alimentation côté primaire (5) configurée pour fournir une tension d'alimentation (6),
- une unité de transmission de puissance (14) comportant une unité de commutation (35) pour commuter la tension d'alimentation (6) et une unité de transfert (36) configurée pour transférer la tension d'alimentation commutée (6) vers le côté secondaire (4), pour convertir la tension d'alimentation (6) en une tension de fonctionnement (27) pour l'unité fonctionnelle (12),

- une unité de modulation côté primaire (7) configurée pour fournir un signal d'horloge (34) à l'unité de commutation (35) et pour faire varier une fréquence du signal d'horloge (34) en fonction de l'information auxiliaire (28), et

- une unité de démodulation côté secondaire (13) configurée pour générer au moins un signal utile (45, 46, 47) représentant l'information auxiliaire (28) à partir d'une tension secondaire (42) fournie par l'unité de transfert (36) et pour fournir un signal utile (47) à l'unité fonctionnelle (12), **caractérisé en ce que** l'unité de modulation (7) est configurée pour faire varier la fréquence du signal d'horloge (34) dans un intervalle de fréquence dans lequel un rapport de conversion de tension entre l'entrée et la sortie de l'unité de transmission de puissance (14) est sensiblement invariant en fréquence.

2. Convertisseur de puissance selon la revendication 1, dans lequel

- l'unité de transmission de puissance (14) présente une topologie à commutation dure et l'unité de modulation (7) est configurée pour fournir le signal d'horloge (34) de telle sorte que l'unité de transmission de puissance (14) fonctionne dans un mode de fonctionnement continu, ou

- l'unité de transmission de puissance (14) présente une topologie résonante avec la charge et l'unité de modulation (7) est configurée pour spécifier la fréquence de telle sorte qu'elle soit au moins égale à 0,2 fois une fréquence de commutation normalisée de l'unité de transmission de puissance (14).

3. Convertisseur de puissance selon la revendication 1 ou 2, dans lequel l'unité de démodulation (13) comprend une unité monoflop (49) dont le temps de maintien est inférieur à la plus courte période du signal d'horloge (34) à laquelle est associé un état d'information de l'information auxiliaire (28), et qui est configurée pour fournir un signal utile modulé en impulsions (45).

4. Convertisseur de puissance selon la revendication 3, dans lequel l'unité de démodulation (13) comprend une unité passe-bas (57) qui est connectée en aval de l'unité monoflop (49) et est configurée pour fournir un signal utile analogique (46) à partir du signal utile modulé en impulsions (45).

5. Convertisseur de puissance selon l'une quelconque des revendications précédentes, dans lequel l'unité de démodulation (13) comprend une unité PLL (70) qui est configurée pour fournir un signal utile analogique (46).

6. Convertisseur de puissance selon la revendication 4 ou 5, dans lequel l'unité de démodulation (13) comprend une unité de conversion analogique-numérique (60) qui est configurée pour convertir le signal utile analogique (46) en un signal utile numérique (47).

7. Convertisseur de puissance selon l'une quelconque des revendications précédentes, dans lequel l'unité de démodulation (13) comprend une unité de filtrage (71) avec au moins un élément de filtrage (73, 73a-73c, 74), dont la réponse en fréquence est choisie de telle sorte que l'élément de filtrage (73, 73a-73c, 74) fonctionne dans une bande d'arrêt ou une bande passante à une fréquence spécifiée par l'unité de modulation (7), où une unité de décision (72) fournissant le signal utile (46, 47) est connectée en aval de l'unité de filtrage (71).

8. Convertisseur de puissance selon l'une quelconque des revendications précédentes, qui comprend une unité de puissance côté secondaire (11) avec au moins un élément de commutation de puissance (20) qui peut être commandé en fonction de signaux de commande générés du côté primaire.

9. Convertisseur de puissance selon la revendication 8, dans lequel l'unité fonctionnelle (12) est une unité de pilotage (23) qui est configurée pour commander l'au moins un élément de commutation de puissance (20) en fonction des signaux de commande.

10. Convertisseur de puissance selon la revendication 9, dans lequel l'unité de pilotage (23) comprend au moins une unité de résistance (26) connectée en amont d'une entrée de commande (25) d'un élément de commutation de puissance (20), dont la valeur de résistance est variable par le signal utile (47), ou dans lequel l'unité de pilotage (23) comprend une unité de commande à caractéristique de source de courant connectée en amont d'une entrée de commande (25) d'un élément de commutation de puissance, dont la valeur de courant et/ou le profil de courant est variable par le signal utile (47).

11. Convertisseur de puissance selon l'une quelconque des revendications 8 à 10, qui comprend une unité de transmission (15) qui isole galvaniquement au moins partiellement le côté primaire (2) et le côté secondaire (4), via laquelle les signaux de commande peuvent être transmis au côté secondaire (4).

12. Convertisseur de puissance selon l'une quelconque des revendications 8 à 11, dans lequel le convertisseur de puissance (1) est configuré comme un onduleur et l'unité de puissance (11) est configurée pour la conversion côté secondaire d'une tension continue d'entrée en une tension alternative de sortie, ou dans lequel le convertisseur de puissance est configuré comme un convertisseur continu-continu et l'unité de puissance est configurée pour la conversion côté secondaire d'une tension continue d'entrée en une tension continue de sortie, ou dans lequel le convertisseur de puissance est configuré comme un redresseur actif et l'unité de puissance est configurée pour convertir une tension alternative d'entrée en une tension continue de sortie.

13. Véhicule (97) comprenant un convertisseur de puissance (1) selon l'une quelconque des revendications précédentes.

14. Procédé de fonctionnement d'un convertisseur de puissance (1) avec un côté primaire (2) et un côté secondaire (4) isolé galvaniquement de celui-ci, comprenant :

> - une unité fonctionnelle côté secondaire (12) qui est exploitée en fonction d'une information auxiliaire (28) générée du côté primaire,
> - une unité d'alimentation côté primaire (5) qui fournit une tension d'alimentation (6), et
> - une unité de transmission de puissance (14) comportant une unité de commutation (35) pour commuter la tension d'alimentation (6) et une unité de transfert (36) qui transfère la tension d'alimentation commutée (6) vers le côté secondaire (4), pour convertir la tension d'alimentation (6) en une tension de fonctionnement (27) pour l'unité fonctionnelle (12), comprenant les étapes suivantes :

> > - fournir, du côté primaire, un signal d'horloge (34) pour l'unité de commutation (35), dont la fréquence est variée du côté primaire en fonction de l'information auxiliaire (28) dans un intervalle de fréquence dans lequel un rapport de conversion de tension entre l'entrée et la sortie de l'unité de transmission de puissance (14) est sensiblement invariant en fréquence ;
> > - générer, du côté secondaire, au moins un signal utile (45, 46, 47) représentant l'information auxiliaire (28) à partir d'une tension secondaire (42) fournie par l'unité de transfert (36) ; et
> > - fournir, du côté secondaire, un signal utile (47) à l'unité fonctionnelle (12).

Fig. 1

# Fig. 2

# Fig. 3

# Fig. 4

# Fig. 5

**Fig. 6**

**Fig. 7**

## Fig. 8

## Fig. 9

Fig. 10

Fig. 11

## Fig. 12

## Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010259098 A1
- EP 2302798 A1
- US 20090147544 A1
- EP 3076550 A1
- EP 0251239 A2